# EUROPEAN PATENT SPECIFICATION

(11) **EP 4 465 670 B1**
(45) Date of publication and mention of the grant of the patent: **31.12.2025**
(21) Application number: 23752473.1
(22) Date of filing: 14.02.2023
(51) Int. Cl.: H04W 12/122, H04L 9/40, G06F 21/64, H04W 12/106, H04W 12/041, H04W 12/108

(54) **COMMUNICATION METHOD, COMMUNICATION APPARATUS, AND SYSTEM**
KOMMUNIKATIONSVERFAHREN, KOMMUNIKATIONSVORRICHTUNG UND SYSTEM
PROCÉDÉ DE COMMUNICATION, APPAREIL DE COMMUNICATION ET SYSTÈME

(30) Priority: 14.02.2022 CN 202210134912
(43) Date of publication of application: 20.11.2024
(73) Proprietor: Huawei Technologies Co., Ltd., Shenzhen, Guangdong 518129 (CN)
(72) Inventor: SHI, Dai, Shenzhen, Guangdong 518129 (CN); XIONG, Xiaochun, Shenzhen, Guangdong 518129 (CN)
(74) Representative: Thun, Clemens
(86) International application number: PCT/CN2023/075963
(87) International publication number: WO 2023/151696

(56) References cited:
- WO-A1-2018/231426
- WO-A1-2020/029266
- WO-A1-2020/149776
- WO-A1-2021/075854
- WO-A1-2021/208802
- CN-A- 109 845 185
- US-A1- 2021 314 771
- LG ELECTRONICS INC.: "Other SI delivery in broadcast manner", 3GPP DRAFT; R2-167050 OTHER SI DELIVERY IN BROADCAST MANNER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kaohsiung, Taiwan; 20161010 - 20161014, 9 October 2016 (2016-10-09), Mobile Competence Centre ; 650, route des Lucioles ; F-06921 Sophia-Antipolis Cedex ; France , XP051151456

## Description

### TECHNICAL FIELD

This application relates to the field of wireless communication technologies, and more specifically, to a communication method, a communication apparatus, and a system.

### BACKGROUND

When no security context is established between a terminal and a base station, a message sent by the base station to the terminal may be stolen and spoofed by a false base station. The false base station may interact with the terminal based on a spoofed message to steal privacy information, causing a security risk.

In some communication technologies, the base station generates protection information such as a signature for the message sent to the terminal. After receiving the message and the protection information of the message that are sent by the base station, the terminal verifies validity of the message by using the protection information. However, there is no clear solution for how the terminal receives the protection information.
The document WO 2020/149776 A1 shows a communication system with verification of broadcast messages using cryptographic measures.

### SUMMARY

The present invention is defined by the independent claims. Further advantageous developments are shown by the dependent claims.

This application provides a communication method and a communication apparatus, so that a terminal can accurately and flexibly receive protection information that is of a message and that is sent by a base station.

According to a first aspect, a communication method is provided. The method may be performed by a base station. The method includes: receiving a first broadcast message; receiving information indicating a transmission resource of a first signature, where the first signature is used to check the first broadcast message; receiving the first signature based on the information indicating the transmission resource of the first signature; and checking the first broadcast message based on the first signature.

In the method, a terminal receives the information indicating the transmission resource of the signature, so that the terminal can obtain the transmission resource of the signature, and therefore can accurately receive, on the transmission resource, the signature sent by the base station. This implements separate transmission of the signature and the message protected by the signature, and improves flexibility of transmitting the signature.

In some implementations, the receiving the first signature based on the information indicating the transmission resource of the first signature includes: receiving a system message based on the information indicating the transmission resource of the first signature. The system message includes the first signature.

In some implementations, the information indicating the transmission resource of the first signature includes: a type of the system message.

In some implementations, the information indicating the transmission resource of the first signature further includes: a sending periodicity of the first signature.

In some implementations, the information indicating the transmission resource of the first signature includes: time domain resource information and/or frequency domain resource information.

When the time domain resource information is a time domain position, the terminal can directly obtain a time at which the signature is transmitted, so that the terminal can wake up and receive the signature only at the time corresponding to the time domain position. This reduces wake-up time of the terminal, and facilitates energy saving of the terminal.

In some implementations, the receiving the first signature based on the information indicating the transmission resource of the first signature includes: performing blind detection in a range indicated by the time domain resource information and/or the frequency domain resource information, determining the transmission resource of the first signature, and receiving the first signature on the determined transmission resource.

In some implementations, the receiving information indicating a transmission resource of a first signature includes: receiving a second broadcast message. The second broadcast message includes the information indicating the transmission resource of the first signature.

In some implementations, the second broadcast message is a system information block 1.

In some implementations, the first broadcast message is the system information block 1, other system information OSI, or a paging message.

In some implementations, in the method, the second broadcast message is a broadcast message used to carry a signature of a system information block 1, or the second broadcast message is OSI.

In some implementations, the first broadcast message is OSI or a paging message.

In some implementations, the second broadcast message is a broadcast message used to carry an OSI signature, or the second broadcast message is a paging message.

In some implementations, the first broadcast message is the paging message.

In some implementations, when the first broadcast message is the OSI, the checking the first broadcast message based on the first signature includes: cascading the OSI, and checking the cascaded OSI based on the first signature.

According to a second aspect, a communication method is provided. The method may be performed by a terminal. The method includes: sending a first broadcast message to a terminal; sending, to the terminal, information indicating a transmission resource of a first signature, where the first signature is used to check the first broadcast message; and sending the first signature to the terminal on a transmission resource corresponding to the information indicating the transmission resource of the first signature.

In the method, a base station sends the information indicating the transmission resource of the signature, so that the terminal can obtain the transmission resource of the signature, and therefore the terminal can accurately receive, on the transmission resource, the signature sent by the base station. This implements separate transmission of the signature and the message protected by the signature, and improves flexibility of transmitting the signature.

In some implementations, the sending the first signature to the terminal on a transmission resource corresponding to the information indicating the transmission resource of the first signature includes: sending a system message to the terminal on the transmission resource. The system message includes the first signature.

In some implementations, the information indicating the transmission resource of the first signature includes: a type of the system message.

In some implementations, the information indicating the transmission resource of the first signature further includes: a sending periodicity of the first signature.

In some implementations, the information indicating the transmission resource of the first signature includes: time domain resource information and/or frequency domain resource information.

When the time domain resource information is a time domain position, the terminal can directly obtain a time at which the signature is transmitted, so that the terminal can wake up and receive the signature only at the time corresponding to the time domain position. This reduces wake-up time of the terminal, and facilitates energy saving of the terminal.

In some implementations, the sending, to the terminal, information indicating a transmission resource of a first signature includes: sending a second broadcast message to the terminal. The second broadcast message includes the information indicating the transmission resource of the first signature.

In some implementations, the second broadcast message is a system information block 1.

In some implementations, the first broadcast message is the system information block 1, other system information OSI, or a paging message.

In some implementations, the second broadcast message is a broadcast message used to carry a signature of a system information block 1, or the second broadcast message is OSI.

In some implementations, the first broadcast message is OSI or a paging message.

In some implementations, the second broadcast message is a broadcast message used to carry an OSI signature, or the second broadcast message is a paging message.

In some implementations, the first broadcast message is the paging message.

In some implementations, when the first broadcast message is the OSI, the method further includes: cascading the OSI, and generating the first signature based on the cascaded OSI.

According to a third aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units corresponding to the foregoing function.

According to a fourth aspect, a communication apparatus is provided. The communication apparatus has a function of implementing the method according to any one of the second aspect or the possible implementations of the second aspect. The function may be implemented by hardware, or may be implemented by hardware executing corresponding software. The hardware or the software includes one or more units corresponding to the foregoing function.

According to a fifth aspect, a communication apparatus is provided and includes a processor and a memory. Optionally, the apparatus may further include a transceiver. The memory is configured to store a computer program. The processor is configured to: invoke and run the computer program stored in the memory, and control the transceiver to receive and send a signal, so that the communication apparatus performs the method according to any one of the first aspect or the possible implementations of the first aspect.

For example, the communication apparatus is a base station in embodiments of this application.

According to a sixth aspect, a communication apparatus is provided and includes a processor and a memory. Optionally, the apparatus may further include a transceiver. The memory is configured to store a computer program. The processor is configured to: invoke and run the computer program stored in the memory, and control the transceiver to receive and send a signal, so that the communication apparatus performs the method according to any one of the second aspect or the possible implementations of the second aspect.

For example, the communication apparatus is a terminal in embodiments of this application.

According to a seventh aspect, a computer-readable storage medium is provided. The computer-readable storage medium stores computer instructions. When the computer instructions are run on a computer, the method according to any one of the first aspect or the possible implementations of the first aspect is enabled to be performed, or the method according to any one of the second aspect or the possible implementations of the second aspect is enabled to be performed.

According to an eighth aspect, a computer program product is provided. The computer program product includes computer program code. When the computer program code is run on a computer, the method according to any one of the first aspect or the possible implementations of the first aspect is enabled to be performed, or the method according to any one of the second aspect or the possible implementations of the second aspect is enabled to be performed.

### BRIEF DESCRIPTION OF DRAWINGS

FIG. 1 is a diagram of a transmission resource used for an SI message according to an embodiment of this application;
FIG. 2 is a schematic flowchart of a security protection method according to an embodiment of this application;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application;
FIG. 6 is a diagram of a structure of another communication apparatus according to an embodiment of this application;
FIG. 7 is a diagram of a structure of still another communication apparatus according to an embodiment of this application; and
FIG. 8 is a diagram of a structure of yet another communication apparatus according to an embodiment of this application.

### DESCRIPTION OF EMBODIMENTS

The following describes embodiments of this application in detail with reference to the accompanying drawings.

The method in embodiments of this application may be applied to a long term evolution (long term evolution, LTE) system, a long term evolution-advanced (long term evolution-advanced, LTE-A) system, an enhanced long term evolution (enhanced long term evolution, eLTE) system, or a new radio (New Radio, NR) system of a 5th generation (5th Generation, 5G) mobile communication system, or may also be extended to a similar wireless communication system, for example, wireless fidelity (wireless fidelity, Wi-Fi), worldwide interoperability for microwave access (worldwide interoperability for microwave access, WIMAX), or a cellular system related to the 3rd generation partnership project (3rd generation partnership project, 3GPP).

The following describes functions of a terminal and a radio access network in this application.

Terminal: may also be referred to as user equipment (user equipment, UE), an access terminal, a terminal device unit (subscriber unit), a terminal device station, a mobile station (mobile station, MS), a remote station, a remote terminal, a mobile device, a user terminal, a terminal (terminal), a wireless communication device, a terminal device proxy, or a terminal device apparatus.

Radio access network (radio access network, RAN): is a device that provides a wireless communication function for a terminal device. In the 5G system, the radio access network may be a network including a plurality of 5G-RAN nodes, to implement a wireless physical layer function, a resource scheduling function, a radio resource management function, a radio access control function, and a mobility management function. The radio access network device is briefly referred to as a base station below.

The following describes specific solution details by using an example in which the solution is applied to the 5G system. It may be understood that when the solution is applied to an LTE system or a future communication system, each device and a message name in the solution may be replaced with another device having a corresponding function and a message having a corresponding function. This is not limited in this application.

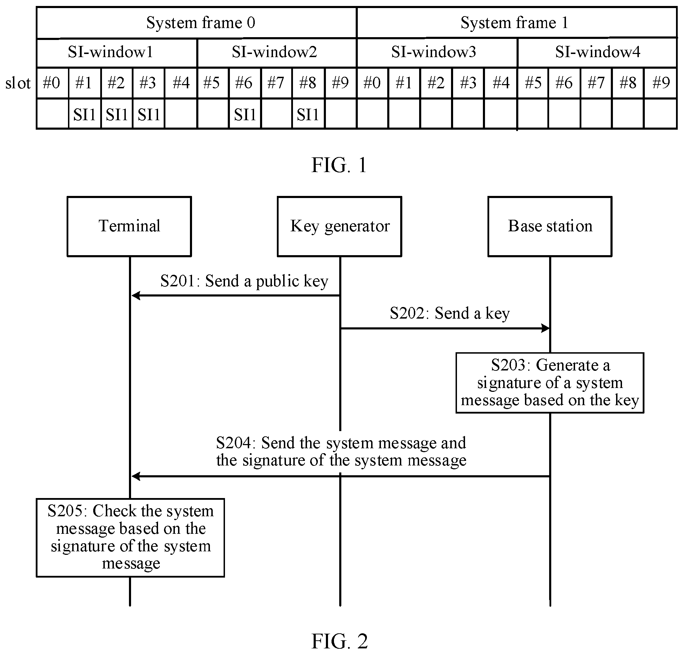

Based on the foregoing network architecture, before a security context is established between the base station and the terminal, there is a security risk in communication between the base station and the terminal, and a message sent by the base station to the terminal may be hijacked by a false base station. FIG. 2 is a schematic flowchart of a security protection method, to protect communication security between a base station and a terminal.

S201: A key generator generates a public key, and presets the public key on the terminal, or sends the public key to the terminal.

S202: The key generator generates a key for the base station, and sends the key to the base station.

S203: The base station generates a signature of a system message based on the key.

The signature may also be referred to as a digital signature.

The system message is sent by the base station to the terminal in a broadcast manner. The system message may be a master information block (master information block, MIB), a system information block (system information block, SIB) 1, or other system information (other system information, OSI). The MIB includes some important and frequently transmitted parameters that need to be obtained by the terminal from an accessed cell, for example, a downlink bandwidth configuration and a system frame number. The SIB1 includes a public land mobile network identifier, a tracking area code, a cell identity, cell selection information, and the like. In addition to the MIB and the SIB1, there are a plurality of system messages, for example, a SIB6, a SIB7, and a SIB8 used for a public safety alarm. The OSI is a general term for system messages other than the MIB and the SIB1. A system message used to carry the OSI may be referred to as a system information (system information, SI) message. One SI message can carry a plurality of pieces of OSI.

Optionally, the base station may generate the signature of the system message based on the key and a time counter (time counter) parameter. The time counter parameter is used to prevent a replay attack. A value of the parameter can be increased as the parameter is used each time. The parameter may be carried in the system message.

S204: The base station sends the system message and the signature of the system message to the terminal.

S205: The terminal checks the system message based on the signature of the system message.

Specifically, the terminal verifies the signature of the system message based on the public key, to determine validity of the received system message.

It may be understood that the validity herein may be understood as that the system message is from an authorized base station, or may be understood as that the system message is trustworthy. The validity herein may also be understood as that the system message is complete.

The foregoing manner of generating and verifying the signature based on the public key and the key may be replaced with a manner of generating and verifying the signature based on a certificate. For details, refer to the existing 3GPP standard TR 33.809. The manner of generating and verifying the signature is not limited in this application.

S204 may be implemented in two manners:
Manner 1: The system message and the signature of the system message are carried in a same message.
Manner 2: The system message and the signature of the system message are carried in different messages. In other words, the terminal respectively receives the system message and the signature of the system message from the different messages.

The security protection method shown in FIG. 2 or the signature in FIG. 2 may not only be used to protect the system message sent by the base station to the terminal, but may also be used to protect another broadcast message (for example, a paging (paging) message) sent by the base station to the terminal, or may further be used to protect a unicast message sent by the base station to the terminal. Descriptions are provided below by using an example in which the signature protects a broadcast message sent by the base station to the terminal. The broadcast message includes the foregoing system message, paging message, and the like.

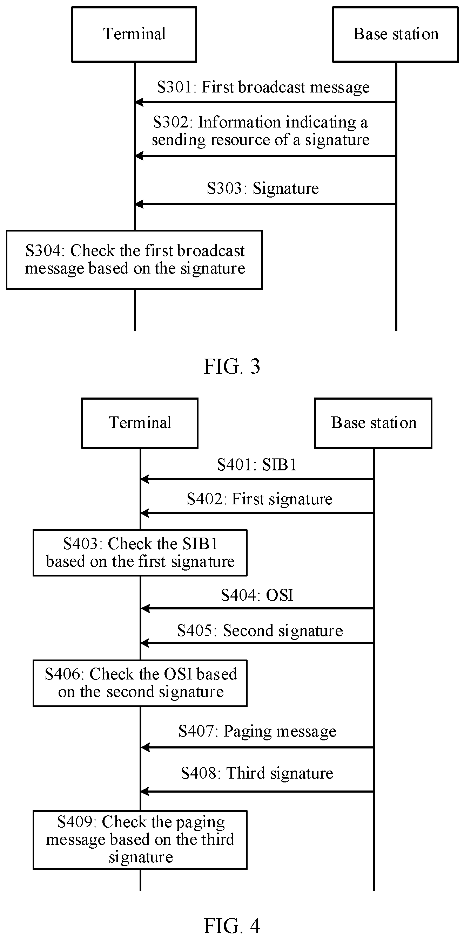

Based on the foregoing manner 2, the following describes how the terminal can accurately and flexibly receive the signature that is of the broadcast message and that is sent by the base station, as shown in FIG. 3.

S301: A base station sends a first broadcast message, and a terminal receives the first broadcast message.

The first broadcast message may be a MIB, a SIB1, OSI, or a paging message. The first broadcast message may alternatively be another broadcast message that needs to be protected by a signature. This is not limited in this application.

S302: The base station sends information indicating a transmission resource of the signature, and the terminal receives the information.

The signature is used to protect or check the first broadcast message. In other words, the base station sends the information indicating the transmission resource of the signature of the first broadcast message.

The transmission resource of the signature is a time-frequency resource used to transmit the signature. The information indicating the transmission resource of the signature may specifically indicate a time-frequency position for transmitting the signature, so that the terminal can receive the signature at the corresponding time-frequency position, or may indicate a time domain range and/or a frequency domain range for transmitting the signature, so that the terminal can determine, through blind detection within the time domain range and/or the frequency domain range, a time domain position and/or a frequency domain position for transmitting the signature. The information indicating the transmission resource of the signature is further described in detail below.

Optionally, the information indicating the transmission resource of the signature may be carried in a second broadcast message sent by the base station to the terminal. The second broadcast message may be the same as or different from the first broadcast message. When the second broadcast message is the same as the first broadcast message, S301 and S302 may be replaced with that the base station sends the first broadcast message, and the terminal receives the first broadcast message, where the first broadcast message includes the information indicating the transmission resource of the signature.

S303: The base station sends the signature on the transmission resource corresponding to the information. Correspondingly, the terminal receives the signature sent by the base station on the transmission resource corresponding to the information. In other words, the terminal receives the signature based on the information.

The signature is the foregoing signature used to protect or check the first broadcast message.

S304: The terminal checks the first broadcast message based on the signature.

From the information that indicates the transmission resource of the signature and that is received by the terminal in S302, the terminal can obtain the transmission resource of the signature, and therefore can accurately receive, on the transmission resource, the signature sent by the base station. This implements separate transmission of the signature and the message protected by the signature, and improves flexibility of transmitting the signature.

The following further describes the process in FIG. 3.

Specifically, the signature in S303 may be sent in a plurality of manners.

Sending manner 1: The signature is carried in a system message.

In other words, the base station sends the system message on the transmission resource. The system message includes the signature. The terminal receives the system message based on the information. The system message includes the signature.

The system message in the sending manner 1 is scheduled by using the SIB1, and may be one of the OSI. The system message may be used to transmit the signature only, or the system message may be used to transmit the signature and other information. For example, the signature may be transmitted by using an idle or unused system message (for example, spare2 or spare3) in the standard, and a corresponding system message type may be named for the system message.

Sending manner 2: The signature is carried in another broadcast message.

The another broadcast message refers to a broadcast message other than a system message. For example, a broadcast message may be newly added, and the newly added broadcast message is used to transmit the signature only, or is used to transmit the signature and other information.

Specifically, in S302, the transmission resource of the signature may be indicated in a plurality of manners.

Indication manner 1: A time domain resource and/or a frequency domain resource for sending the signature are/is indicated. In other words, the information indicating the transmission resource of the signature includes: time domain resource information and/or frequency domain resource information.

The time domain resource information may be a time domain position or a time domain range. The frequency domain resource information may be a frequency domain position or a frequency domain range.

When the time domain resource information is the time domain position, the terminal may directly obtain, based on the information, a time domain position at which the signature is received. Similarly, when the frequency domain resource information is the frequency domain position, the terminal may directly obtain, based on the information, a frequency domain position at which the signature is received. When the time domain resource information is the time domain position, the terminal can directly obtain a time at which the signature is transmitted, so that the terminal can wake up and receive the signature only at the time corresponding to the time domain position. This reduces wake-up time of the terminal, and facilitates energy saving of the terminal.

When the time domain resource information is the time domain range, the terminal may perform blind detection within the time domain range, determine a time domain position for sending the signature, and receive the signature at the determined time domain position. Similarly, when the frequency domain resource information is the frequency domain range, the terminal may perform blind detection within the frequency domain range, determine a frequency domain position for sending the signature, and receive the signature at the determined frequency domain position.

It may be understood that the time domain resource information and the frequency domain resource information may be indicated in different manners. For example, the time domain resource information is a time-frequency position, and the frequency domain resource information is a frequency domain range. Alternatively, the time domain resource information and the frequency domain resource information may be indicated in a same manner. For example, the terminal may perform blind detection within the time domain range and/or the frequency domain range by using a system information-radio network temporary identifier (system information-radio network temporary identifier, SI-RNTI), to obtain downlink control information (downlink control information, DCI) transmitted on a physical downlink control channel (physical downlink control channel, PDCCH), and therefore learn that the signature is sent on a time-frequency resource indicated by the DCI. Similarly, the terminal may alternatively perform blind detection on a PDCCH by using a public scrambling code identifier, for example, a paging-radio network temporary identifier (paging-radio network temporary identifier, P-RNTI), to obtain the transmission resource of the signature via DCI.

In the indication manner, the information indicating the transmission resource of the signature may be carried in a system message, a paging message, or another broadcast message.

When the signature is sent in the sending manner 1, the transmission resource of the signature may be indicated in the following manner.

Indication manner 2: A type of the system message carrying the signature is indicated. In other words, the information indicating the transmission resource of the signature includes the type of the system message.

Because the system message is scheduled by using the SIB1, the terminal may obtain, based on scheduling information in the SIB1, a transmission resource that is used to transmit the signature and that is of the system message. It may be understood that, in the indication manner, the information indicating the transmission resource of the signature is carried in the SIB1. In the indication manner, the terminal obtains, from the scheduling information in the SIB1 and based on the type of the system message, the transmission resource of the system message carrying the signature. Because the transmission resource is learned of based on the scheduling information in the SIB 1, it can be ensured that a transmission resource of an SI message that carries the system message does not overlap a transmission resource of another message, so that the terminal can accurately receive the signature on the corresponding transmission resource.

Optionally, the indication manner 2 further includes: A sending periodicity of the signature is indicated. In other words, the information indicating the transmission resource of the signature further includes the sending periodicity of the signature. It may be understood that, in addition, the terminal may alternatively locally configure the sending periodicity of the signature, and the sending periodicity may be understood as a default sending periodicity.

For example, the SIB1 includes SI scheduling information (si-SchedulingInfo), and the SI scheduling information includes SI window information and an information list of SI messages scheduled by using the SIB 1. The information list includes information about all the SI messages scheduled by using the SIB1, and the information about the SI message includes a type of a system message carried by the SI message and a sending periodicity of the SI message. The terminal determines a send window of the SI message based on the SI window information and the sending periodicity of the SI message. The terminal performs blind detection on the PDCCH in the corresponding window by using the SI-RNTI, and determines a slot for transmitting the SI message in the corresponding window.

The following describes the indication manner 2 by using an example with reference to the 3GPP standard TS 38.331.

The SIB1 may have the following structure:

```
          SIB 1
          {
           cellAccessRelatedInfo
           si-SchedulingInfo
          }
```

In other words, the SIB1 may include the si-SchedulingInfo and the cell access information cellAccessRelatedInfo.

The si-SchedulingInfo may have the following structure:

```
          si-SchedulingInfo
          {
           schedulingInfoList
           si-WindowLength
          }
```

The schedulingInfoList is the information list of the SI messages scheduled by using the SIB1, and the si-WindowLength is an SI window length.

The schedulingInfoList may have the following structure:

```
          schedulingInfoList
          {
            {
               si-BroadcastStatus:broadcasting
               si-Periodicity:rf8
               sib-MappingInfo
               {
                     sibType2
               }
               sib-MappingInfo
               {
                     sibType3
               }
          }
            {
               si-BroadcastStatus:broadcasting
               si-Periodicity:rf16
               sib-MappingInfo
               {
                     sibType#
               }
               sib-MappingInfo
               {
                     sibType5
               }
            }
          }
```

The schedulingInfoList includes scheduling information of two SI messages. The si-BroadcastStatus:broadcasting indicates that a corresponding SI message is sent in a broadcast manner. The si-Periodicity indicates a sending periodicity of the corresponding SI message. The terminal may determine the transmission resource of the SI message based on the sending periodicity and the SI window length. For details of the process, refer to a section 5.2.2.3.2 in the 3GPP standard TS 38.311. The sib-MappingInfo includes a type of a system message carried in the SI message. In other words, in the example, the sibType2 and the sibType3 respectively included in two pieces of sib-MappingInfo in a 1^{st} SI message indicate that the 1^{st} SI message carries a system message SIB2 and a system message SIB3. In addition, it may be learned, based on the value rf8 of the si-Periodicity, that a sending periodicity of the SI message is eight radio frames. Similarly, a 2^{nd} SI message carries a system message SIB5 and a system message whose type is sibType#. The system message whose type is sibType# is a system message used to transmit a signature. That the type of the system message is named sibType# is merely an example. The type of the system message may specifically be a type of a currently idle or unused system message, or may be a newly defined system message type. In addition, a sending periodicity of the SI message is 16 radio frames.

Based on the foregoing example, as shown in FIG. 1, a start position of an SI window in which the SI message is located may be learned of based on the si-WindowLength field and information about the si-Periodicity field corresponding to the SI message. For example, a start position of an SI window corresponding to the 1^{st} SI message (denoted as SI1) is a slot (slot) #0 of a system frame 0, and a start position of an SI window corresponding to the 2^{nd} SI message (denoted as SI2) is a slot #5 of the system frame 0. The terminal obtains, by performing blind detection on the PDCCH in a corresponding time window, a specific slot on which a corresponding SI message is transmitted. Further, when the terminal obtains the slot on which the SI message is transmitted, that is, when the terminal receives the SI message, the SI message sequentially or successively includes OSI carried in the SI message, where for example, the SI1 successively includes the SIB2 and SIB3 messages, and therefore when receiving the SI1 message, the terminal receives, via the SI1 message, the SIB2 and the SIB3 carried in the SI message, that is, when the terminal obtains a slot on which the SI1 message is transmitted, the terminal obtains a slot on which the SIB2 and the SIB3 carried in the SI1 message are transmitted.

Optionally, when information about the SI message does not include the sending periodicity, this may be understood as that the sending periodicity is a default value.

The following further describes the process in FIG. 3 with reference to FIG. 4.

FIG. 4 is a schematic flowchart of a method in which a SIB1 carries information indicating a transmission resource of a signature, to perform security protection.

S401. A base station sends the SIB1, and a terminal receives the SIB1.

In a first implementation, the SIB1 includes information indicating a transmission resource of a SIB1 signature. The SIB1 signature is used to protect or check the SIB1.

A transmission resource of the signature may be indicated in the foregoing indication manner 1 or the foregoing indication manner 2. When the indication manner 2 is used for the transmission resource of the signature, because a sending periodicity of the SIB1 is 20 milliseconds ms and a changing periodicity is 160 ms, a sending periodicity of the signature may be indicated as 160 ms in the SIB1, or the sending periodicity may be 160 ms by default, or the sending periodicity of the signature may be set to be shorter, to reduce waiting time of the terminal for obtaining the information, and reduce latency in checking the SIB1 by the terminal.

After receiving the SIB1, the terminal obtains the information that is in the SIB1 and that indicates the transmission resource of the signature.

S402: The base station sends a first signature on the corresponding transmission resource, and the terminal receives the first signature based on the information indicating the transmission resource of the SIB 1 signature.

The first signature is the SIB1 signature, namely, a signature used to check or protect the SIB1.

The corresponding transmission resource is the transmission resource corresponding to the information indicating the transmission resource of the SIB 1 signature.

The first signature may be carried in an SI message or another broadcast message.

S403: The terminal checks the SIB1 based on the first signature.

According to S401, the terminal can obtain the information that is in the SIB1 and that indicates the transmission resource of the SIB1 signature, and can therefore obtain the transmission resource of the SIB1 signature. On this basis, the terminal can accurately receive, on the transmission resource, the SIB1 signature sent by the base station. This implements separate transmission of the SIB1 and the SIB1 signature, and improves flexibility of transmitting the signature.

In a second implementation, the SIB1 includes information indicating a transmission resource of an OSI signature. The OSI signature is used to protect or check OSI.

The transmission resource of the OSI signature may also be indicated in the foregoing indication manner 1 or the foregoing indication manner 2. For details, refer to content of S401.

In this case, the following steps are performed after S401.

S404: The base station sends the OSI, and the terminal receives the OSI.

The OSI is scheduled by using the SIB1. To be specific, the terminal obtains a transmission resource of the OSI based on scheduling information in the SIB1, and receives the OSI based on the transmission resource. For details of the process, refer to the 3GPP standard TS 38.331 and the standard TS 38.311.

S405: The base station sends a second signature on the corresponding transmission resource, and the terminal receives the second signature based on the information indicating the transmission resource of the OSI signature.

The second signature is the OSI signature, namely, a signature used to check or protect the OSI.

The corresponding transmission resource is the transmission resource corresponding to the information indicating the transmission resource of the OSI signature.

The second signature may be carried in an SI message or another broadcast message.

S406: The terminal checks the OSI based on the second signature.

When the OSI includes a plurality of system messages, the base station may generate the second signature based on the OSI that is cascaded, and the terminal may cascade the received OSI, and then check the cascaded OSI based on the second signature. Cascading may be understood as successively combining the plurality of system messages included in the OSI into entire information, where the information is used as an input parameter for generating the signature. When the OSI includes a plurality of system messages, the base station may alternatively respectively generate a plurality of signatures for the system messages. In other words, the second signature includes the plurality of signatures. It may be understood that, because a length of a signature is usually fixed, in comparison with respectively generating a signature for each system message included in the OSI, generating a signature based on the cascaded OSI can reduce a total signature length, and therefore reduce signaling overheads required for transmitting the signature. The length of the signature is usually fixed specifically because of a commonly used signature algorithm. For details, refer to the 3GPP standard TR 33.809. Details are not described herein.

According to S401, the terminal can obtain the information that is in the SIB1 and that indicates the transmission resource of the OSI signature, and can therefore obtain the transmission resource of the OSI signature. On this basis, the terminal can accurately receive, on the transmission resource, the OSI signature sent by the base station. This implements separate transmission of the OSI and the OSI signature, and improves flexibility of transmitting the signature.

In a third implementation, the SIB1 includes information indicating a transmission resource of a paging signature. The paging signature is used to protect or check a paging message.

The transmission resource of the paging signature may also be indicated in the foregoing indication manner 1 or the foregoing indication manner 2. For details, refer to content of S401.

In this case, the following steps are performed after S401.

S407: The base station sends the paging message, and the terminal receives the paging message.

S408: The base station sends a third signature on the corresponding transmission resource, and the terminal receives the third signature based on the information indicating the transmission resource of the paging signature.

The third signature is the paging signature, namely, a signature used to check or protect the paging.

The corresponding transmission resource is the transmission resource corresponding to the information indicating the transmission resource of the paging signature.

The third signature may be carried in an SI message or another broadcast message.

S409: The terminal checks the paging message based on the third signature.

According to S401, the terminal can obtain the information that is in the SIB1 and that indicates the transmission resource of the paging signature, and can therefore obtain the transmission resource of the paging signature. On this basis, the terminal can accurately receive, on the transmission resource, the paging signature sent by the base station. This implements separate transmission of the paging and the paging signature, and improves flexibility of transmitting the signature.

Optionally, the SIB1 may alternatively include information indicating transmission resources of a plurality of signatures, or the SIB1 includes information indicating a transmission resource of a signature, and the signature is used to protect a plurality of broadcast messages. For example, when the SIB1 includes both the information indicating the transmission resource of the SIB1 signature and the information indicating the transmission resource of the OSI signature, S401 to S403, and S404 to S406 are performed. For example, when the SIB1 includes the information indicating the transmission resource of the OSI signature and the information indicating the transmission resource of the paging signature, S401, S404 to S406, and S407 to S409 are performed. On this basis, the terminal may obtain the transmission resource of the signature of the plurality of broadcast messages via the SIB1. This improves efficiency of learning of the transmission resource of the signature by the terminal.

The foregoing describes a case in which the information indicating the transmission resource of the signature is carried in the SIB1. The following describes, based on the procedure in FIG. 4, a case in which the information indicating the transmission resource of the signature is carried in the OSI or is carried in an SI message carrying the OSI.

In the second implementation, the information indicating the transmission resource of the OSI signature may not be carried in the SIB1, but may be carried in the OSI, or may be carried in the SI message used to carry the OSI. The OSI herein is the OSI to be protected or checked by the OSI signature. In this case, the OSI in S404 includes the information indicating the transmission resource of the OSI signature, or the SI message used to carry the OSI in S404 includes the information indicating the transmission resource of the OSI signature.

Based on the manner, when not transmitting the OSI, the base station does not need to send the information indicating the transmission resource of the OSI signature, and the terminal does not need to receive the information either. Only when transmitting the OSI, the base station needs to together send the OSI and the information indicating the transmission resource of the OSI signature. The terminal obtains, only when receiving the OSI, the information indicating the transmission resource of the OSI signature. This reduces unnecessary signaling transmission.

In the second implementation, the information indicating the transmission resource of the OSI signature may not be carried in the SIB 1, but may be carried in the OSI, or may be carried in the SI message used to carry the OSI. The OSI here is not the OSI to be protected or checked by the OSI signature. For example, a SIB2 or an SI message carrying the SIB2 includes information indicating a transmission resource of a SIB3 signature. Based on the manner, the information indicating the transmission resource of the signature can be transmitted more flexibly.

Optionally, in either of the two manners, when the SIB1 signature is transmitted in the SI message or the another broadcast message, the information indicating the transmission resource of the OSI signature and the SIB1 signature may be carried in a same message.

In the third implementation, the information indicating the transmission resource of the paging signature may not be carried in the SIB1, but may be carried in the OSI, or may be carried in a broadcast message used to carry the OSI. In this case, the OSI in S404 includes the information indicating the transmission resource of the paging signature, or the SI message used to carry the OSI in S404 includes the information indicating the transmission resource of the paging signature. S407 to S409 are performed after S404.

Optionally, when the SIB1 signature is transmitted in the SI message or the another broadcast message, the information indicating the transmission resource of the paging signature and the SIB1 signature may be carried in a same message.

Optionally, when the OSI signature is transmitted in the SI message or the another broadcast message, the information indicating the transmission resource of the paging signature and the OSI signature may be carried in a same message.

Optionally, the OSI or the SI message carrying the OSI may include the information indicating the transmission resources of the plurality of signatures, or the OSI or the SI message carrying the OSI includes the information indicating the transmission resource of the signature. The signature is used to protect the plurality of broadcast messages. For example, when the OSI includes both the information indicating the transmission resource of the OSI signature and the information indicating the transmission resource of the paging signature, S401, S404 to S406, and S407 to S409 are performed. When the SIB1 further includes the information indicating the transmission resource of the SIB1 signature, S402 and S403 are further performed.

Based on the manner, signaling load of the SIB1 is reduced, and the information indicating the transmission resource of the signature can be transmitted more flexibly.

The following describes, based on the procedure in FIG. 4, a case in which the information indicating the transmission resource of the signature is carried in the paging message.

In the third implementation, the information indicating the transmission resource of the paging signature may not be carried in the SIB1, but may be carried in the paging message. In this case, the paging message in S407 includes the information indicating the transmission resource of the paging signature. In other words, S407 to S409 are performed after S401. Optionally, when the SIB1 includes the information indicating the transmission resource of the SIB1 signature, and the OSI includes the information indicating the transmission resource of the paging signature, S402, S403, and S404 to S406 are further performed.

Based on the manner, when not transmitting the paging, the base station does not need to send the information indicating the transmission resource of the paging signature, and the terminal does not need to receive the information either. Only when transmitting the paging, the base station needs to also send the information indicating the transmission resource of the paging signature. The terminal obtains the information only when receiving the paging. This reduces unnecessary signaling transmission.

Optionally, when the OSI changes, the foregoing procedure further includes the following steps.

S410. The base station sends a system message modification notification, and the terminal receives the notification.

For example, the base station may send the system message modification notification in the following manners.

Manner 1: The base station sends DCI in a format 1_0 to the terminal. The DCI includes a short message (Short Message), and the short message includes a system information modification (systemInfoModification) field and an earthquake and tsunami warning system and commercial mobile alert system indication (etwsAndCmasIndication) field. The systemInfoModification field indicates that a system message other than a SIB6, a SIB7, and a SIB8 changes. The etwsAndCmasIndication field indicates that the SIB6, the SIB7, or the SIB8 changes. The terminal directly obtains changed OSI from the short message.

Manner 2: The base station sends the SIB1 to the terminal. The sib-MappingInfo in the SIB1 includes a value tag (valueTag) field. The valueTag field indicates that a system message corresponding to the sib-MappingInfo changes. The terminal obtains changed OSI based on a change of the valueTag value.

S411: The base station sends the changed OSI, and the terminal receives the changed OSI.

Optionally, in the OSI in S404, some OSI changes, and other OSI does not change. The terminal may receive only the changed OSI based on the changed OSI learned of in S410.

S412: The base station sends a fourth signature, and the terminal receives the fourth signature.

The fourth signature is used to protect or check updated OSI.

Optionally, when only some OSI of the OSI in S404 changes, the fourth signature is generated based on the changed OSI and the foregoing other OSI that does not change.

Optionally, the base station may not send information indicating a transmission resource of the fourth signature. In this case, this may be considered as that the fourth signature and the second signature use the same transmission resource. Based on the manner, signaling overheads required for re-indicating the transmission resource of the signature can be reduced, and the terminal can be prevented from re-confirming the transmission resource of the signature. This saves a processing resource of the terminal.

Optionally, the base station may send information indicating a transmission resource of the fourth signature. For details, refer to sending of the foregoing information indicating the transmission resource of the second signature. Details are not described herein.

S413: The terminal checks, based on the fourth signature, OSI carried in an updated SI message.

The terminal may cascade the changed OSI in the updated SI with the unchanged OSI stored in the terminal, and check the cascaded OSI based on the fourth signature.

Based on the procedure, when the OSI changes, the terminal may obtain the fourth signature based on S412 and S413, and check the changed OSI based on the fourth signature.

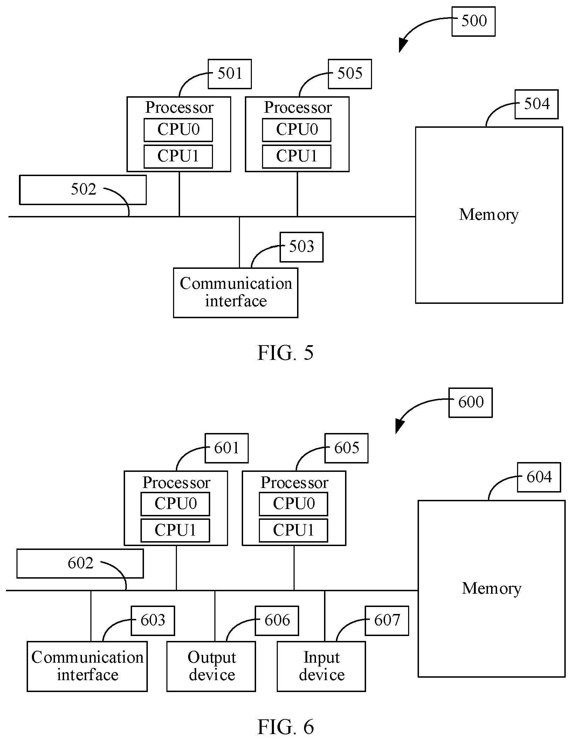

FIG. 5 is a communication apparatus according to an embodiment of this application. The communication apparatus may be configured to implement, for example, a function of the base station according to FIG. 2 to FIG. 4. FIG. 5 is a diagram of a structure of a communication apparatus 500 according to an embodiment of this application. The communication apparatus 500 includes one or more processors 501, a communication line 502, and at least one communication interface. (FIG. 5 is merely an example, and is described by using an example in which the communication apparatus 500 includes a communication interface 503 and one processor 501.) Optionally, the communication apparatus 500 may further include a memory 504.

The processor 501 may be a general-purpose central processing unit (central processing unit, CPU), a microprocessor, an application-specific integrated circuit (application-specific integrated circuit, ASIC), or one or more integrated circuits configured to control program execution in solutions of this application.

The communication line 502 is configured to connect different components.

The communication interface 503 may be a transceiver module configured to communicate with another device, communication apparatus, or communication network such as an Ethernet. For example, the transceiver module may be a network adapter or an optical fiber switching apparatus. Optionally, the communication interface 503 may be a transceiver circuit located in the processor 501, and is configured to implement signal inputting and signal outputting of the processor.

The memory 504 may be an apparatus having a storage function. For example, the memory 504 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, or the like), a magnetic disk storage medium or another magnetic storage device, or any other medium that is capable of carrying or storing expected program code in a form of instructions or a data structure and that is accessible by a computer. This is not limited thereto. The memory may exist independently, and is connected to the processor through the communication line 502. Alternatively, the memory may be integrated with the processor.

The memory 504 is configured to store computer-executable instructions for performing the solutions of this application, and the processor 501 controls execution. The processor 501 is configured to execute the computer-executable instructions stored in the memory 504, to implement a function of a first network element in a first embodiment in this application, or a function of a first network element in a second embodiment, or a function of a first network element in a third embodiment, or a function of a first apparatus in a fifth embodiment. The computer-executable instructions in embodiments of this application may also be referred to as application program code. This is not specifically limited in embodiments of this application.

During specific implementation, in an embodiment, the processor 501 may include one or more CPUs, for example, a CPU0 and a CPU1 in FIG. 5.

During specific implementation, in an embodiment, the communication apparatus 500 may include a plurality of processors, for example, the processor 501 and a processor 505 in FIG. 5. Each of the processors may be a single-core (single-CPU) processor or may be a multi-core (multi-CPU) processor. The processor herein may be one or more devices, circuits, and/or processing cores configured to process data (for example, computer program instructions).

The communication apparatus 500 may be a general-purpose apparatus or a dedicated apparatus. For example, the communication apparatus 500 may be a network server, an embedded device, or a device having a structure similar to that in FIG. 5. A type of the communication apparatus 500 is not limited in embodiments of this application.

It may be understood that, in the foregoing embodiments, the methods and/or steps implemented by the base station may alternatively be implemented by a chip system that implements a function of the base station.

FIG. 6 is a communication apparatus according to an embodiment of this application. The communication apparatus may be configured to implement, for example, a function of the terminal according to FIG. 2 to FIG. 4. FIG. 6 is a diagram of a structure of a communication apparatus 600 according to an embodiment of this application. The communication apparatus 600 includes one or more processors 601, a communication line 602, and at least one communication interface. (FIG. 6 is merely an example, and is described by using an example in which the communication apparatus 600 includes a communication interface 603 and one processor 601.) Optionally, the communication apparatus 600 may further include a memory 604.

The processor 601 may be a general-purpose central processing unit (central processing unit, CPU), a microprocessor, an application-specific integrated circuit (application-specific integrated circuit, ASIC), or one or more integrated circuits configured to control program execution in solutions of this application.

The communication line 602 is configured to connect different components.

The communication interface 603 may be a transceiver module configured to communicate with another device, communication apparatus, or communication network such as an Ethernet, a RAN, or a wireless local area network (wireless local area network, WLAN). For example, the transceiver module may be an apparatus such as a transceiver, or may alternatively be a network adapter or an optical fiber switching apparatus. Optionally, the communication interface 603 may be a transceiver circuit located in the processor 601, and is configured to implement signal inputting and signal outputting of the processor.

The memory 604 may be an apparatus having a storage function. For example, the memory 604 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, or the like), a magnetic disk storage medium or another magnetic storage device, or any other medium that is capable of carrying or storing expected program code in a form of instructions or a data structure and that is accessible by a computer. This is not limited thereto. The memory may exist independently, and is connected to the processor through the communication line 602. Alternatively, the memory may be integrated with the processor.

The memory 604 is configured to store computer-executable instructions for performing the solutions of this application, and the processor 601 controls execution. The processor 601 is configured to execute the computer-executable instructions stored in the memory 604, to implement a function of a first terminal device in a fourth embodiment in this application, or a function of a first apparatus in a fifth embodiment. The computer-executable instructions in embodiments of this application may also be referred to as application program code. This is not specifically limited in embodiments of this application.

During specific implementation, in an embodiment, the communication apparatus 600 may further include an output device 66 and an input device 607. The output device 606 communicates with the processor 601, and may display information in a plurality of manners.

During specific implementation, in an embodiment, the processor 601 may include one or more CPUs, for example, a CPU0 and a CPU1 in FIG. 6.

During specific implementation, in an embodiment, the communication apparatus 600 may include a plurality of processors, for example, the processor 601 and a processor 605 in FIG. 6. Each of the processors may be a single-core (single-CPU) processor or may be a multi-core (multi-CPU) processor. The processor herein may be one or more devices, circuits, and/or processing cores configured to process data (for example, computer program instructions).

The communication apparatus 600 may be a general-purpose apparatus or a dedicated apparatus. For example, the communication apparatus 600 may be a network server, an embedded device, a desktop computer, a portable computer, a mobile phone, a tablet computer, a wireless terminal device, or a device having a structure similar to that in FIG. 6. A type of the communication apparatus 600 is not limited in embodiments of this application.

It may be understood that, in the foregoing embodiments, the methods and/or steps implemented by the terminal may alternatively be implemented by a chip system that implements a function of the terminal.

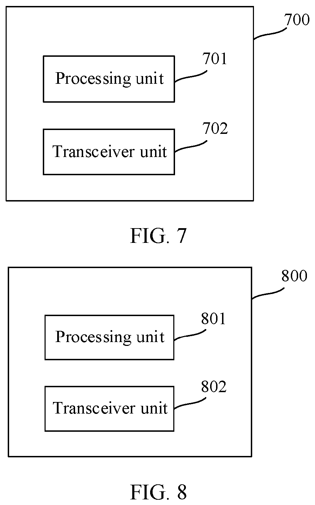

FIG. 7 is a communication apparatus according to an embodiment of this application. The communication apparatus may be configured to implement, for example, a function of the base station according to FIG. 2 to FIG. 4. In embodiments of this application, the communication apparatus may be divided into functional units. For example, each functional unit may be obtained through division based on each corresponding function, or two or more units may be integrated into one processing module. The integrated unit may be implemented in a form of hardware, or may be implemented in a form of a software functional module. It should be noted that, in embodiments of this application, unit division is an example, and is merely a logical function division. In actual implementation, there may be another division manner.

FIG. 7 is a diagram of a structure of a communication apparatus 700 according to an embodiment of this application. The communication apparatus 700 includes a processing unit 701 and a transceiver unit 702.

Optionally, the processing unit 701 is specifically configured to perform a signature generation function in S203, S303, S402, S405, and S408.

Optionally, the transceiver unit 702 is specifically configured to perform functions such as sending the broadcast message by the base station, sending the information indicating the sending resource of the signature, and sending the signature in FIG. 2 to FIG. 4.

Specifically, a function/an implementation process of the transceiver unit 702 and the processing unit 701 in FIG. 7 may be implemented by the processor 501 in the communication device 500 in FIG. 5 by invoking computer-executable instructions stored in the memory 504. Alternatively, a function/an implementation process of the processing unit 701 in FIG. 7 may be implemented by the processor 501 in the communication device 500 in FIG. 5 by invoking computer-executable instructions stored in the memory 504. A function/an implementation process of the transceiver unit 702 in FIG. 7 may be implemented by the communication interface 503 in the communication device 500 in FIG. 5.

FIG. 8 is a communication apparatus according to an embodiment of this application. The communication apparatus may be configured to implement, for example, a function of the terminal according to FIG. 2 to FIG. 4. In embodiments of this application, the communication apparatus may be divided into functional units. For example, each functional unit may be obtained through division based on each corresponding function, or two or more units may be integrated into one processing module. The integrated unit may be implemented in a form of hardware, or may be implemented in a form of a software functional module. It should be noted that, in embodiments of this application, unit division is an example, and is merely a logical function division. In actual implementation, there may be another division manner.

FIG. 8 is a diagram of a structure of a communication apparatus 800 according to an embodiment of this application. The communication apparatus 800 includes a processing unit 801 and a transceiver unit 802.

Optionally, the processing unit 801 is specifically configured to: perform a function of checking the broadcast message based on the signature in S205, S304, S403, S406, and S409, or may alternatively be configured to perform a function of learning of the sending resource of the signature in S302 and FIG. 4.

Optionally, the transceiver unit 802 is specifically configured to perform functions such as receiving the broadcast message by the terminal, receiving the information indicating the sending resource of the signature, and receiving the signature in FIG. 2 to FIG. 4.

Specifically, a function/an implementation process of the transceiver unit 802 and the processing unit 801 in FIG. 8 may be implemented by the processor 601 in the communication device 600 in FIG. 6 by invoking computer-executable instructions stored in the memory 604. Alternatively, a function/an implementation process of the processing unit 801 in FIG. 8 may be implemented by the processor 601 in the communication device 600 in FIG. 6 by invoking computer-executable instructions stored in the memory 604. A function/an implementation process of the transceiver unit 602 in FIG. 8 may be implemented by the communication interface 603 in the communication device 600 in FIG. 6.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that the measures cannot be combined to produce a good effect.

## Claims

1. A communication method, comprising:
receiving (S301) a first broadcast message;
receiving (S302) information indicating a transmission resource of a first signature, wherein the first signature is used to check the first broadcast message;
receiving (S303) the first signature based on the information indicating the transmission resource of the first signature; and
checking (S304) the first broadcast message based on the first signature,
wherein the receiving (S303) the first signature based on the information indicating the transmission resource of the first signature comprises: receiving a system message based on the information indicating the transmission resource of the first signature, wherein the system message comprises the first signature,
wherein the information indicating the transmission resource of the first signature comprises one or more of: a type of the system message, a sending periodicity of the first signature, time domain resource information and/or frequency domain resource information.

2. The method according to claim 1, wherein the information indicating the transmission resource of the first signature comprises the time domain resource information and/or the frequency domain resource information, and wherein the receiving the first signature based on the information indicating the transmission resource of the first signature comprises: performing blind detection in a range indicated by the time domain resource information and/or the frequency domain resource information, determining the transmission resource of the first signature, and receiving the first signature on the determined transmission resource.

3. The method according to any one of claims 1 to 2, wherein the first broadcast message is the system information block 1, other system information OSI, or a paging message.

4. The method according to claim 3, wherein the first broadcast message is the OSI, the checking the first broadcast message based on the first signature comprises: cascading the OSI, and checking the cascaded OSI based on the first signature.

5. A communication method, comprising:
sending (S301) a first broadcast message to a terminal;
sending (S302), to the terminal, information indicating a transmission resource of a first signature, wherein the first signature is used to check the first broadcast message; and
sending (S303) the first signature to the terminal on a transmission resource corresponding to the information indicating the transmission resource of the first signature,
wherein the sending (S303) the first signature to the terminal on a transmission resource corresponding to the information indicating the transmission resource of the first signature comprises: sending a system message to the terminal on the transmission resource, wherein the system message comprises the first signature,
wherein the information indicating the transmission resource of the first signature comprises one or more of: a type of the system message, a sending periodicity of the first signature, time domain resource information and/or frequency domain resource information.

6. The method according to claim 5, wherein the first broadcast message is the system information block 1, other system information OSI, or a paging message.

7. The method according to claim 6, wherein the first broadcast message is the OSI, the method further comprises: cascading the OSI, and generating the first signature based on the cascaded OSI.

8. A communication apparatus, configured to perform the method according to any one of claims 1 to 4, or any one of claims 5 to 7.

9. A communication system, comprising:
a terminal configured to perform the method according to any one of claims 1 to 4;
a base station configured to perform the method according to any one of claims 5 to 7.

10. A readable storage medium, comprising a computer program, wherein when the computer program is run on a computer, the computer is enabled to perform the method according to any one of claims 1 to 4 or claims 5 to 7.

11. A computer program product, comprising computer program code, wherein when the computer program code is run on a computer, the computer is enabled to perform the method according to any one of claims 1 to 4 or claims 5 to 7.

## Patentansprüche

1. Kommunikationsverfahren, das Folgendes umfasst:
Empfangen (S301) einer ersten Rundsendenachricht;
Empfangen (S302) von Informationen, die ein Sendebetriebsmittel einer ersten Signatur angeben, wobei die erste Signatur verwendet wird, um die erste Rundsendenachricht zu prüfen;
Empfangen (S303) der ersten Signatur auf der Grundlage der Informationen, die das Sendebetriebsmittel der ersten Signatur angeben; und
Prüfen (S304) der ersten Rundsendenachricht auf der Grundlage der ersten Signatur,
wobei das Empfangen (S303) der ersten Signatur auf der Grundlage der Informationen, die das Sendebetriebsmittel der ersten Signatur angeben, Folgendes umfasst:
Empfangen einer Systemnachricht auf der Grundlage der Informationen, die das Sendebetriebsmittel der ersten Signatur angeben, wobei die Systemnachricht die erste Signatur umfasst,
wobei die Informationen, die das Sendebetriebsmittel der ersten Signatur angeben, eines oder mehrere der Folgenden umfassen: einen Typ der Systemnachricht, eine Sendeperiodizität der ersten Signatur, Zeitbereichs-Betriebsmittelinformationen und/oder Frequenzbereichs-Betriebsmittelinformationen.

2. Verfahren nach Anspruch 1, wobei die Informationen, die das Sendebetriebsmittel der ersten Signatur angeben, die Zeitbereichs-Betriebsmittelinformationen und/oder die Frequenzbereichs-Betriebsmittelinformationen umfassen und das Empfangen der ersten Signatur auf der Grundlage der Informationen, die das Sendebetriebsmittel der ersten Signatur angeben, Folgendes umfasst: Durchführen einer blinden Detektion in einem Umfang, der durch die Zeitbereichs-Betriebsmittelinformationen und/oder die Frequenzbereichs-Betriebsmittelinformationen angegeben ist, Bestimmen des Sendebetriebsmittels der ersten Signatur und Empfangen der ersten Signatur im bestimmten Sendebetriebsmittel.

3. Verfahren nach einem der Ansprüche 1 bis 2, wobei die erste Rundsendenachricht der Systeminformationsblock 1, weitere Systeminformationen OSI oder eine "Paging"-Nachricht ist.

4. Verfahren nach Anspruch 3, wobei die erste Rundsendenachricht die OSI ist und das Prüfen der ersten Rundsendenachricht auf der Grundlage der ersten Signatur Folgendes umfasst: Kaskadieren der OSI und Prüfen der kaskadierten OSI auf der Grundlage der ersten Signatur.

5. Kommunikationsverfahren, das Folgendes umfasst:
Senden (S301) einer ersten Rundsendenachricht zu einem Endgerät;
Senden (S302) zum Endgerät von Informationen, die ein Sendebetriebsmittel einer ersten Signatur angeben, wobei die erste Signatur verwendet wird, um die erste Rundsendenachricht zu prüfen; und
Senden (S303) der ersten Signatur zum Endgerät in einem Sendebetriebsmittel, das den Informationen entspricht, die das Sendebetriebsmittel der ersten Signatur angeben, wobei das Senden (S303) der ersten Signatur zum Endgerät in einem Sendebetriebsmittel, das den Informationen entspricht, die das Sendebetriebsmittel der ersten Signatur angeben, Folgendes umfasst: Senden einer Systemnachricht zum Endgerät in dem Sendebetriebsmittel, wobei die Systemnachricht die erste Signatur umfasst,
wobei die Informationen, die das Sendebetriebsmittel der ersten Signatur angeben, eines oder mehrere der Folgenden umfassen: einen Typ der Systemnachricht, eine Sendeperiodizität der ersten Signatur, Zeitbereichs-Betriebsmittelinformationen und/oder Frequenzbereichs-Betriebsmittelinformationen.

6. Verfahren nach Anspruch 5, wobei die erste Rundsendenachricht der Systeminformationsblock 1, weitere Systeminformationen OSI oder eine "Paging"-Nachricht ist.

7. Verfahren nach Anspruch 6, wobei die erste Rundsendenachricht die OSI ist und das Verfahren ferner Folgendes umfasst: Kaskadieren der OSI und Erzeugen der ersten Signatur auf der Grundlage der kaskadierten OSI.

8. Kommunikationsvorrichtung, die konfiguriert ist, das Verfahren nach einem der Ansprüche 1 bis 4 oder einem der Ansprüche 5 bis 7 durchzuführen.

9. Kommunikationssystem, das Folgendes umfasst:
ein Endgerät, das konfiguriert ist, das Verfahren nach einem der Ansprüche 1 bis 4 durchzuführen;
eine Basisstation, die konfiguriert ist, das Verfahren nach einem der Ansprüche 5 bis 7 durchzuführen.

10. Lesbares Speichermedium, das ein Computerprogramm umfasst, wobei dann, wenn das Computerprogramm in einem Computer ausgeführt wird, dem Computer ermöglicht wird, das Verfahren nach einem der Ansprüche 1 bis 4 oder der Ansprüche 5 bis 7 durchzuführen.

11. Computerprogrammprodukt, das Computerprogrammcode umfasst, wobei dann, wenn der Computerprogrammcode in einem Computer ausgeführt wird, dem Computer ermöglicht wird, das Verfahren nach einem der Ansprüche 1 bis 4 oder der Ansprüche 5 bis 7 durchzuführen.

## Revendications

1. Procédé de communication, comprenant :
la réception (S301) d'un premier message de diffusion ;
la réception (S302) d'informations indiquant une ressource de transmission d'une première signature, dans lequel la première signature est utilisée pour contrôler le premier message de diffusion ;
la réception (S303) de la première signature sur la base des informations indiquant la ressource de transmission de la première signature ; et
le contrôle (S304) du premier message de diffusion sur la base de la première signature, dans lequel la réception (S303) de la première signature sur la base des informations indiquant la ressource de transmission de la première signature comprend : la réception d'un message de système sur la base des informations indiquant la ressource de transmission de la première signature, dans lequel le message de système comprend la première signature,
dans lequel les informations indiquant la ressource de transmission de la première signature comprennent un ou plusieurs éléments parmi : un type du message de système, une périodicité d'envoi de la première signature, des informations de ressource de domaine temporel, et/ou des informations de ressource de domaine fréquentiel.

2. Procédé selon la revendication 1, dans lequel les informations indiquant la ressource de transmission de la première signature comprennent les informations de ressource de domaine temporel et/ou les informations de ressource de domaine fréquentiel, et dans lequel la réception de la première signature sur la base des informations indiquant la ressource de transmission de la première signature comprend : la réalisation de détection aveugle dans une étendue indiquée par les informations de ressource de domaine temporel et/ou les informations de ressource de domaine fréquentiel, la détermination de la ressource de transmission de la première signature, et la réception de la première signature sur la ressource de transmission déterminée.

3. Procédé selon l'une quelconque des revendications 1 et 2, dans lequel le premier message de diffusion est le bloc d'informations de système 1, d'autres informations de système, « Other System Information », OSI, ou un message de radiomessagerie.

4. Procédé selon la revendication 3, dans lequel le premier message de diffusion est les OSI, le contrôle du premier message de diffusion sur la base de la première signature comprend : la mise en cascade des OSI, et le contrôle des OSI mises en cascade sur la base de la première signature.

5. Procédé de communication, comprenant :
l'envoi (S301) d'un premier message de diffusion à un terminal ;
l'envoi (S302), au terminal, des informations indiquant une ressource de transmission d'une première signature, dans lequel la première signature est utilisée pour contrôler le premier message de diffusion ; et
l'envoi (S303) de la première signature au terminal sur une ressource de transmission correspondant aux informations indiquant la ressource de transmission de la première signature,
dans lequel l'envoi (S303) de la première signature au terminal sur une ressource de transmission correspondant aux informations indiquant la ressource de transmission de la première signature comprend : l'envoi d'un message de système au terminal sur la ressource de transmission, dans lequel le message de système comprend la première signature,
dans lequel les informations indiquant la ressource de transmission de la première signature comprennent un ou plusieurs éléments parmi : un type du message de système, une périodicité d'envoi de la première signature, des informations de ressource de domaine temporel, et/ou des informations de ressource de domaine fréquentiel.

6. Procédé selon la revendication 5, dans lequel le premier message de diffusion est le bloc d'informations de système 1, d'autres informations de système, « Other System Information », OSI, ou un message de radiomessagerie.

7. Procédé selon la revendication 6, dans lequel le premier message de diffusion est les OSI, le procédé comprend en outre : la mise en cascade des OSI, et la génération de la première signature sur la base des OSI mises en cascade.

8. Appareil de communication, configuré pour réaliser le procédé selon l'une quelconque des revendications 1 à 4, ou l'une quelconque des revendications 5 à 7.

9. Système de communication, comprenant :
un terminal configuré pour réaliser le procédé selon l'une quelconque des revendications 1 à 4 ;
une station de base configurée pour réaliser le procédé selon l'une quelconque des revendications 5 à 7.

10. Support de stockage lisible, comprenant un programme d'ordinateur, dans lequel, lorsque le programme d'ordinateur est exploité sur un ordinateur, l'ordinateur est à même de réaliser le procédé selon l'une quelconque des revendications 1 à 4 ou des revendications 5 à 7.

11. Produit programme d'ordinateur, comprenant un code de programme d'ordinateur, dans lequel lorsque le code de programme d'ordinateur est exploité sur un ordinateur, l'ordinateur est à même de réaliser le procédé selon l'une quelconque des revendications 1 à 4 ou des revendications 5 à 7.
